# EUROPEAN PATENT SPECIFICATION

(11) **EP 1 515 402 B1**
(45) Date of publication and mention of the grant of the patent: **11.05.2016**
(21) Application number: 04397017.7
(22) Date of filing: 03.09.2004
(51) Int. Cl.: H01R 13/655

(54) **Electrical mounting fixture for buildings**
Elektrische Befestigungsanordnung für Gebäude
Montage électrique pour bâtiment

(30) Priority: 15.09.2003 FI 20035155
(43) Date of publication of application: 16.03.2005
(73) Proprietor: ABB Oy, 00380 Helsinki (FI)
(72) Inventor: Parviainen, Mauri, 10160 Degerby (FI); Käyrä, Juha, 91100 Ii (FI)
(74) Representative: LEITZINGER OY

(56) References cited:
- EP-A- 0 337 332
- DE-U- 29 622 813
- GB-A- 544 961
- US-A- 2 445 604
- US-A- 2 920 303
- US-A1- 2002 055 301

## Description

The invention relates to an electrical mounting fixture for use in the electrical installations of buildings, comprising a body of insulating material, metallic terminal units, including first connectors intended for contact with electric conductors, and a housing section constituting a cover or a case which conceals an interior of the electrical mounting fixture, said interior including at least the body and the terminal units.

This type of electrical mounting fixtures are typically socket-outlets or switches.

Accordingly, a typical embodiment of the invention relates to a 2-gang socket-outlet, further comprising
- second connectors included in the terminal units and matched for contact with the prongs of a plug, and
- an earth terminal unit, which is provided with earth springs matched for contact with the earth clips of a plug and with a third connector intended for contact with an earth wire.

In prior known 2-gang socket-outlets, and generally in electrical mounting fixtures used in the electrical installations of buildings, the connectors for wires are typically designed in the way of screw or spring connectors. A screw connector requires plenty of space and takes a long time to connect. A spring connector, with its disengagement elements, is technically demanding in terms of manufacturing. In addition, a joint made in the field is not always sufficiently reliable. The attachment of a socket-outlet to a mounting socket generally requires a rotating motion. This motion is stressful for wire connections, especially when the latter are present on the external surfaces of a body, which is the case in nearly all socket-outlets fitted with screw connectors and often also in spring connector socket-outlets.

DE 296 22 813 U shows an electrical mounting fixture having slit connectors outside the insulating body. Electric supply conductors are connected to the slit connectors through insulation of the conductors.

It is an object of the invention to provide an electrical mounting fixture, wherein the design of connectors is simplified while speeding up and facilitating the making of a joint.

This object is accomplished by the invention on the basis of the characterizing features set forth in the appended claim 1. Preferred embodiments and structural solutions of the invention are disclosed in the dependent claims.

By virtue of the invention it is possible to place conductors and connections therefor in the way of minimizing the risk of damage thereto. In addition, the field installation work is as simple as possible and the electrical mounting fixture is compatible with various rapid connector systems. Furthermore, the connecting cables used in a preferred embodiment of the invention may vary in length, whereby the coupling thereof is not necessarily effected in the same socket used for the electrical mounting fixture, but e.g. in an adjacent socket. The ends of connecting cables may be provided with cap fittings or rapid connectors.

The invention will now be described in more detail by way of exemplary embodiments with reference to the accompanying drawings, in which
- Fig. 1: shows a concealed installation socket-outlet in a view from the side of a housing plate or cover 1,
- Fig. 2: shows the socket-outlet of fig. 1 in a view diagonally from the bottom side,
- Fig. 3: shows the socket-outlet of figs. 1 and 2 in an assembly view, the components of an interior 5 being depicted apart from each other,
- Fig. 4: shows the same as fig. 3, but at a different angle of view diagonally from the side of the cover 1,
- Fig. 5: shows the interior components of a socket-outlet apart from each other diagonally from the bottom side prior to coupling cables to connectors,
- Fig. 6: shows a terminal unit according to one embodiment of the invention, having a connecting cable (7) pre-coupled thereto by means of a connector 4.1 providing a clamp joint,
- Fig. 7: shows the terminal unit of fig. 6 prior to coupling a conductor,
- Fig. 8: shows an earth terminal unit according to one embodiment of the invention, having a connecting cable 10 pre-coupled thereto by means of a connector 9.3 providing a clamp joint,
- Fig. 9: shows an interior for a socket-outlet of the invention fitted in a mounting socket 12,
- Fig. 10: shows a terminal unit 4 according to a second embodiment of the invention, including a flat connector 4.1', and an electric conductor or connecting cable 7 with its mating connector 7.1,
- Fig. 11: shows the terminal unit 4 of fig. 10, having the electric conductor or connecting cable 7 coupled to its flat connector 4.1' by means of the mating connector 7.1,
- Fig. 12: shows an earth terminal unit 9 according to a second embodiment of the invention, having an electric conductor or short connecting cable 10 engageable with its flat connector 9.3 by means of a mating connector 10.1,
- Fig. 13: shows the terminal unit of fig. 12, having the electric conductor or connecting cable 10 coupled to its flat connector 9.3 by means of the mating connector 10.1,
- Fig. 14: shows an interior for a socket-outlet of the invention fitted with the flat connectors of figs. 10-13 for the mating connectors of the conductors 7, 10,
- Fig. 15: shows an interior for the socket-outlet of fig. 14 in a view from the bottom side without conductors,
- Fig. 16: shows the socket-outlet interior of figs. 14 and 15 in a view from the front side, and
- Fig. 17: shows a socket-outlet provided with the connectors and the interior of figs. 10-16 in a view from the bottom side, the connectible conductors or short connecting cables 7, 10 being disconnected.

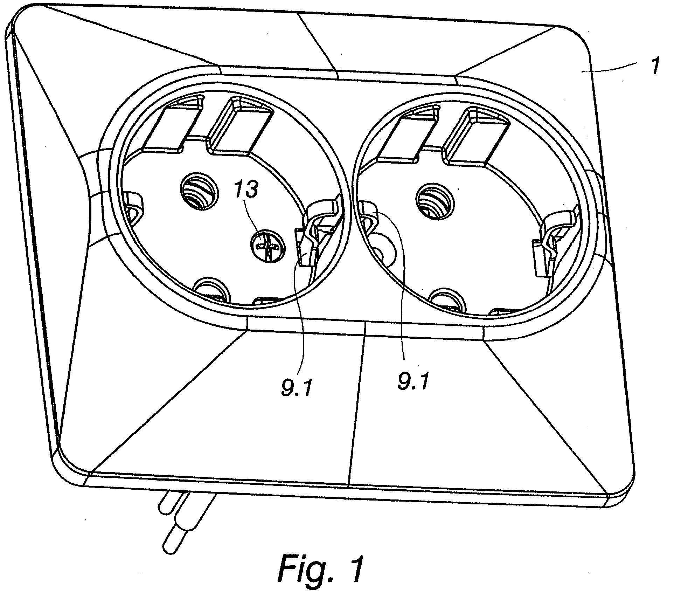

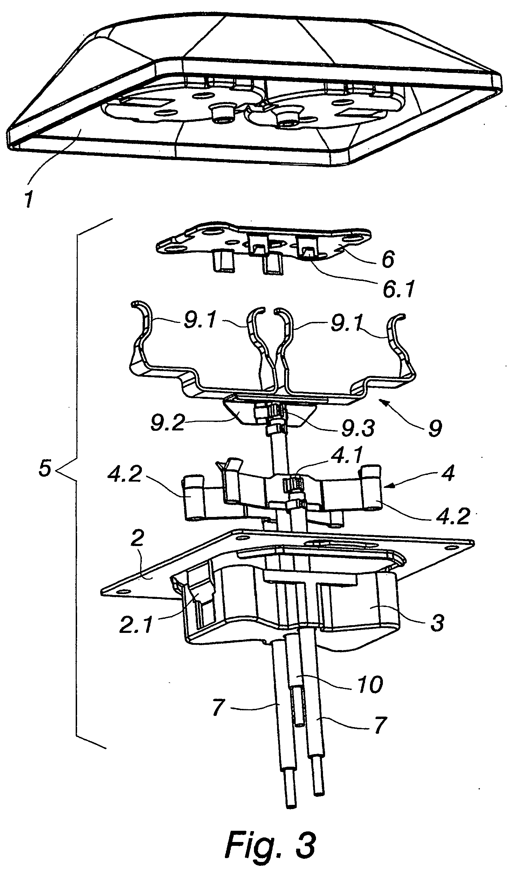

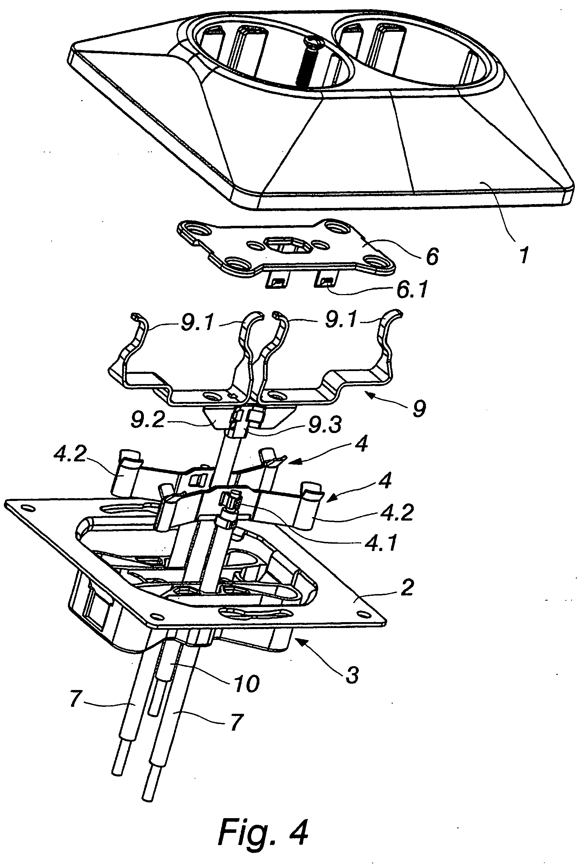

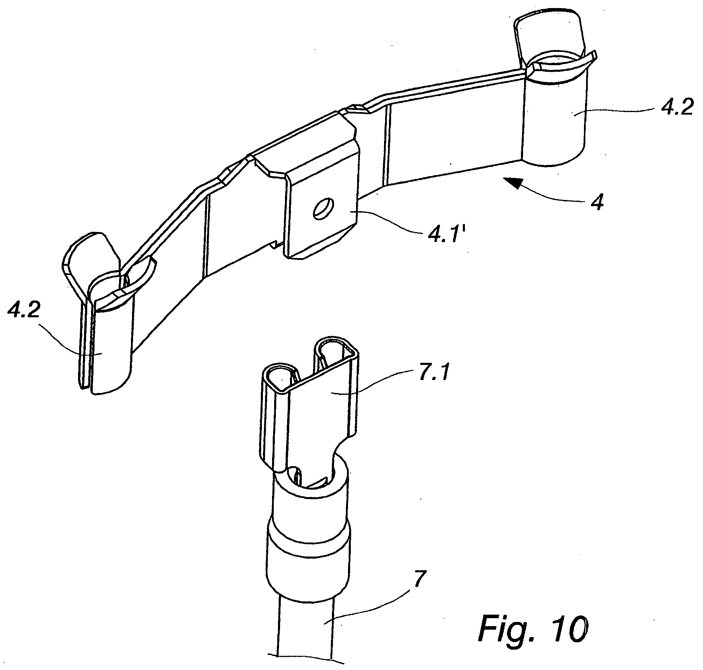

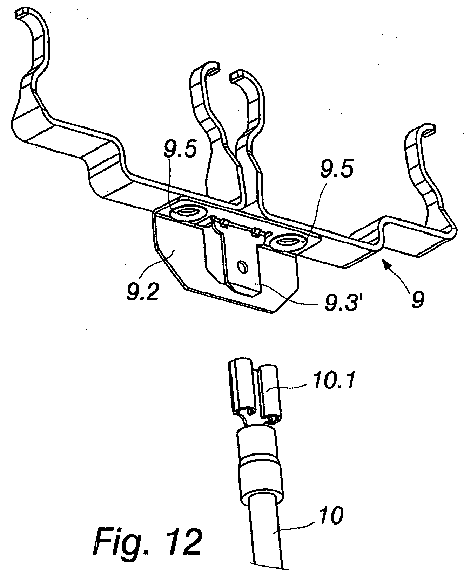

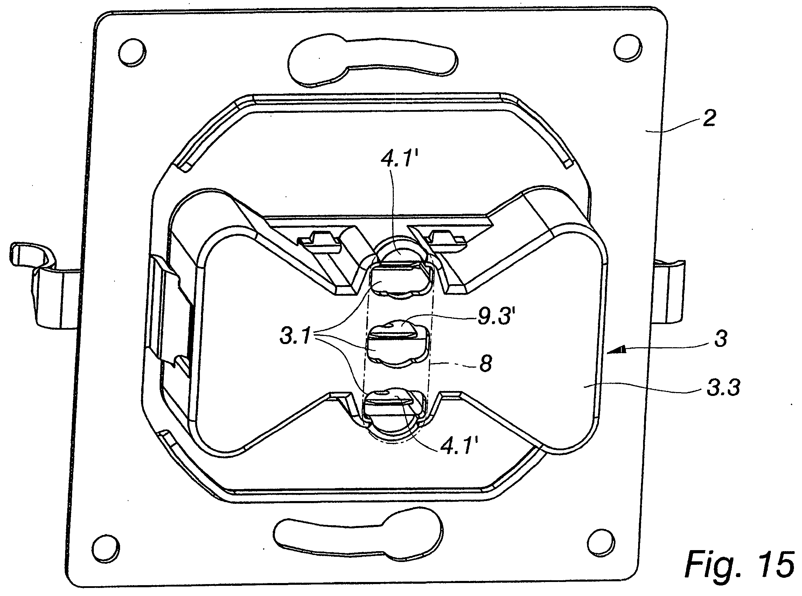

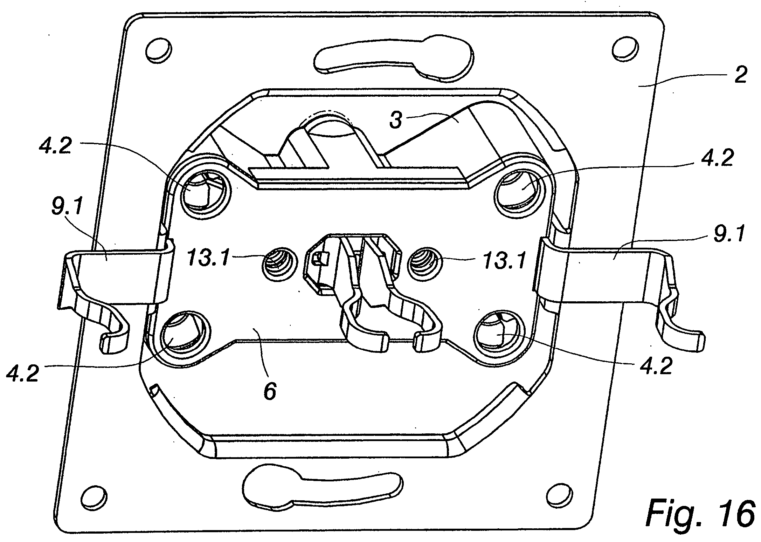

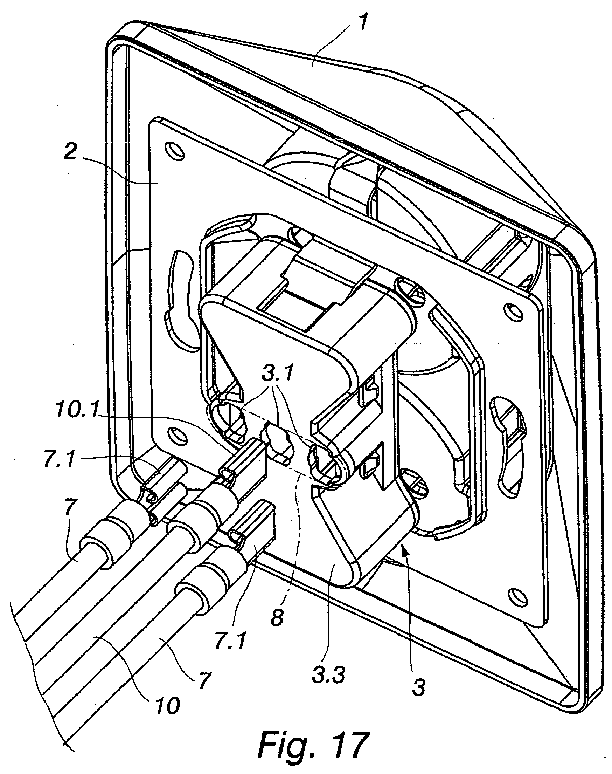

In the drawings, the elements of various embodiments are designated with the same reference numerals, even when different from each other in terms of structure and shape. This applies particularly to the design of connectors. Figs. 1-9 illustrate clamp connectors 4.1 and 9.3, with the ends of conductors 7 and 10 coupled thereto. The embodiment of figs. 10-17 involves the use of flat connectors 4.1' and 9.3', with mating connectors 7.1 and 10.1 present at the ends of conductors being disengageably connectible thereto. In both embodiments, the clamp connectors 4.1 and 9.3 or the flat connectors 4.1' and 9.3' are constituted by lugs formed by bending the actual material of terminal units 4 and 9. Furthermore, in a third embodiment the connectors can be designed in the way of connector prongs fastened to the terminal units 4 and 9 by welding or clamping. Thus, the flat connectors 4.1' and 9.3', visualised in figs. 10 and 12, are replaced by prongs, which are attached to the units 4 and 9 by welding and which extend side by side in the socket-outlet at a given mutual spacing so as to enable connecting the plug of a given terminal system directly to a connector constituted by the prongs. Figs 15 and 17 illustrate by a dash-and-dot line the area which in this embodiment has been designed as a receptacle for a plug in the body's 3 bottom 3.3.

The main components in a 2-gang socket-outlet of the invention are a housing section or cover 1, a mounting plate 2, a body 3 of insulating material, which is attached to the mounting plate 2 with claws 2.1, metallic terminal units 4, an earth terminal unit 9, and an insulating element 6 which serves as a cover for the body 3 and conceals the terminal units 4.

Aside from the housing section 1, the above components make up an interior 5 assembled for a single package, which houses all technical features of the socket-outlet. In addition, the insulating element 6 can be topped with child protectors.

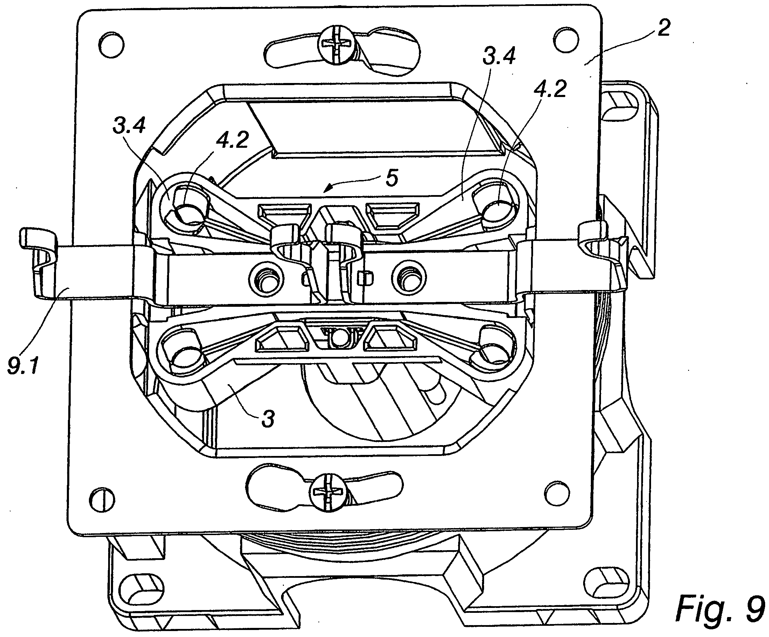

The body 3 is provided with two elongated recesses 3.4 (Fig. 9) with expanded ends for receiving subsequently described terminal units 4, such that the terminal units 4 and an earth terminal unit 9 to be placed therebetween are spaced and electrically insulated from each other. The body 3 has its bottom provided with three holes 3.1, whereby electric conductors and an earth conductor, or connecting cables 7 and 10 attachable thereto, can be brought to the connectors 4.1/4.1' and 9.3. The connecting cables 7 and 10 are pre-attached to the connectors 4.1/4.1' and 9.3 at the factory. In the process of installation, the socket-outlet is coupled by its connecting cables to the electric conductors and the earth wire by means of cap fittings, rapid connectors (e.g. a spring connector) or the like. These connectors may also be supplied with the product and attaching points therefor may be provided in the interior of the socket-outlet.

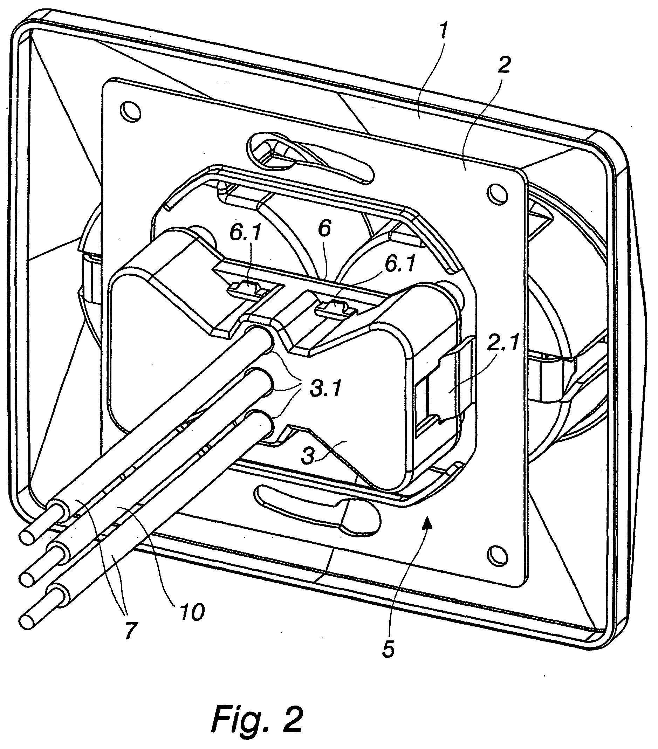

The number of terminals for the connector is selected in view of best serving the branching requirements. The insulating element 6 functioning as a cover for the body 3 attaches in place by fastening tabs 6.1 (Fig. 2), extending through openings in the sides of the body (3) and engaging with the bottom edges of the openings. The cover 1 attaches to the body 3 by screws 13.

The terminal unit 4 comprises second connectors 4.2 matched for contact with the prongs of plugs, and first connectors 4.1/4.1' intended for contact with electric wires either through a fitting or connecting cables. The terminal unit is manufactured in a single piece by double-folding a blank panel after providing the blank panel with necessary cutouts and bent formations (connectors 4.1 and 4.2). The connectors 4.1/4.1' punched out of a blank panel can be bent to the final shapes thereof after double-folding the blank panel. In the case of a clamp connector 4.1, the blank panel is further punched for lugs 4.3 which can be pressed around the conductor's 7 insulating element to provide a cable clamp. The clamp connector 4.1 has its lugs pressed directly around a stripped end of the short connecting cable 7.

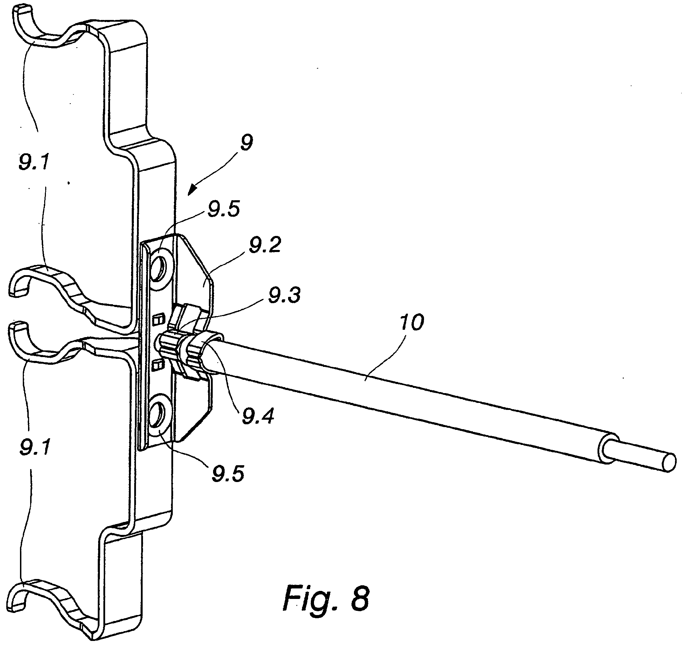

The earth terminal unit 9 shown in fig. 8 consists of three elements. Two pieces of cradle guards 9.1 are attached to each other by means of a grounding bridge 9.2, which is riveted to the guards 9.1 by rivets 9.5 drawn from the very material of the cradle guard. The clamp connector 9.3 has its lugs and also the cable clamp 9.4 has its lugs punched out of the grounding bridge's 9.2 material. The connecting cable 10 has its end attached to the connector 9.3 by clamping.

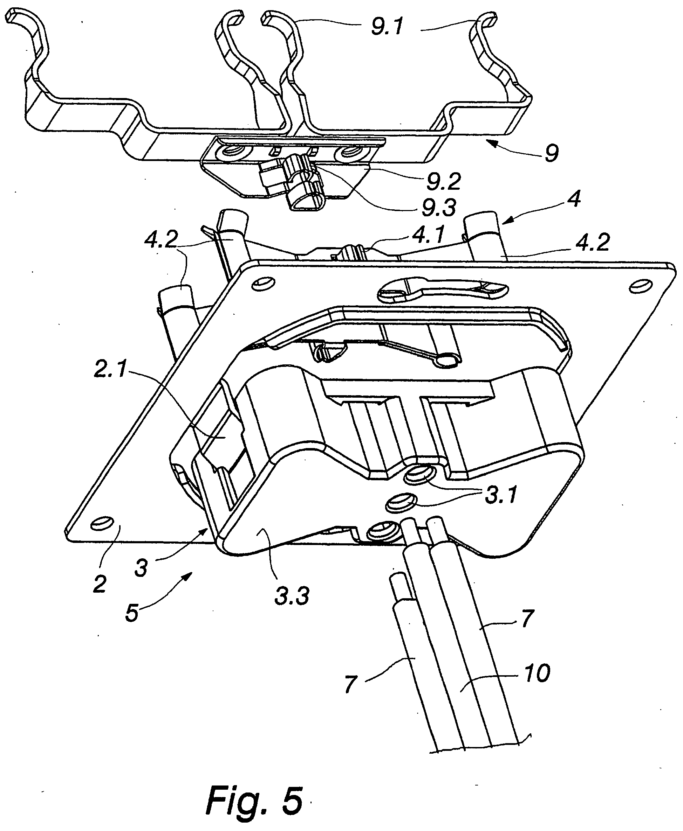

Fig. 5 visualises a sequence of assembling the connector. The connecting cables 7, 10 are inserted through the body's 3 openings 3.1, the terminal units 4 and 10 being off the body. The connecting cables' 7 and 10 ends are clamped securely in the connectors 4.1 and 9.3 and simultaneously clamped securely in the cable clamp 4.3 and 9.4 with a special tool. Finally, the conductors 7, 10 are pulled back in such a way that the terminal units 4 and 9 proceed into terminal receptacles present in the body 3.

Fig. 9, in particular, illustrates the way of providing a space-saving solution by means of a socket-outlet construction of the invention. The terminal units 4 extending between the connectors 4.1 approach each other at the mid-section of the units, in which the connectors 4.1 are located. Thus, there is plenty of unoccupied space left along the sides of the body 3, which can be utilized, whenever necessary, as a cable space for extra lengths of cable or for making splice joints.

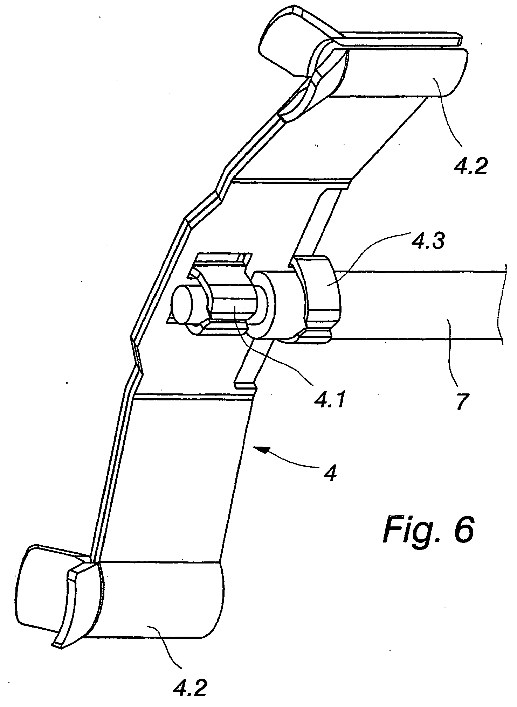

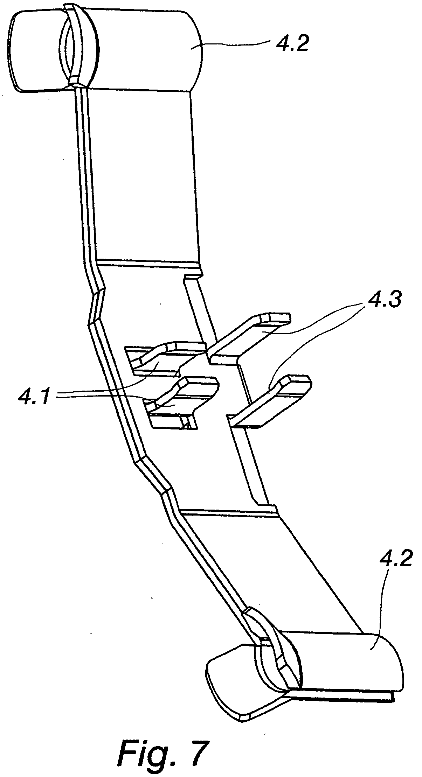

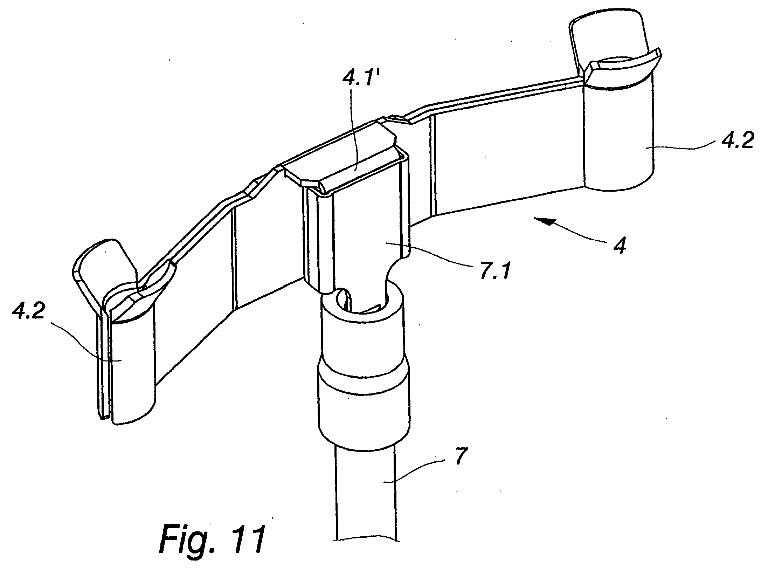

The terminal unit 4 shown in figs. 10 and 11 is different in terms of its connector design from that described in reference with figs. 6 and 7. In this case, the connector 4.1' comprises a flat connector punched and bent from the very material of a terminal unit 4, in which the mating connector 7.1 mounted on the end of the cable 7 is releasably insertable.

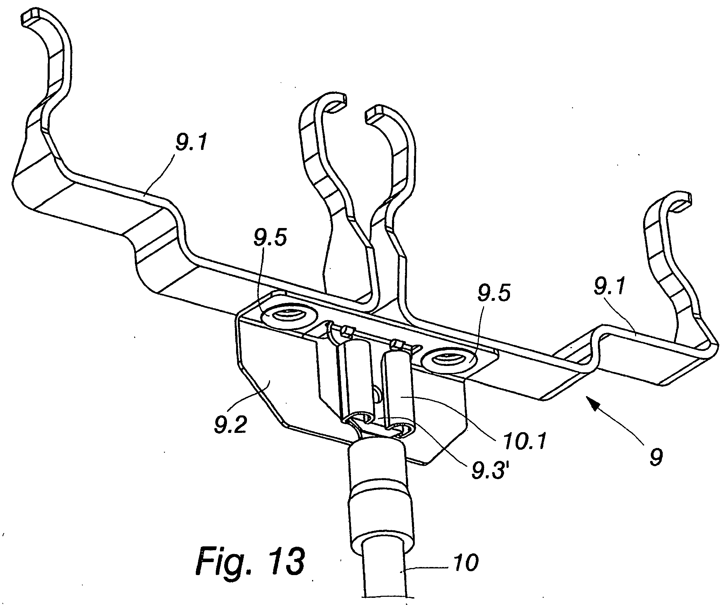

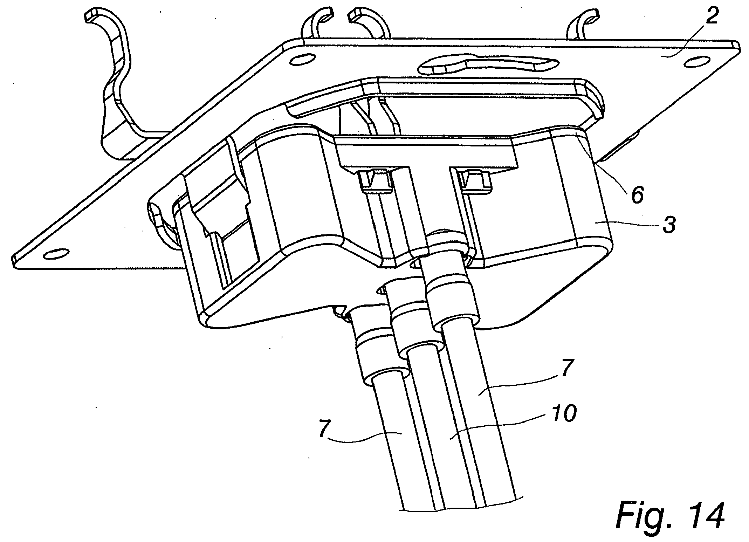

Respectively, the earth terminal unit shown in figs. 12 and 13 is only different in terms of a connector 9.3 from that described in reference to fig. 8. In this case, the connector 9.3' is implemented as a flat connector punched and bent from the material of a grounding bridge 9.2, in which the mating connector 10.1 mounted on the end of the cable 10 is releasably insertable. Thus, the conductors can be, as in the preceding embodiment, connecting cables of a desired length or may also be in the form of actual electric conductors coupled directly to the flat connectors 4.1' and 9.3'. Fig. 14 shows a condition, in which the conductors 7, 10 are coupled to the flat connectors of a socket-outlet and figs. 15 and 17 show a condition, in which the conductors are disengaged from the connectors 4.1' and 9.3'. The body 3 has the mid-section of its bottom 3.3 provided with three holes 3.1 side by side, through which the mating connectors 7.1 and 10.1 can be inserted to couple the same with the connectors. In all depicted embodiments, a line of connectors established by the connectors 4.1/4.1' and 9.3/9.3' (and respectively a line established by the holes 3.1) is transverse to the longitudinal direction of the terminal units 4 and 9. A line of connectors can be inclined or establish some other pattern relative to the longitudinal direction of the terminal units. The angle of inclination can be used for adjusting a relative distance between the contact prongs to match various rapid connectors. The earth connector 9.3 is always located between the connectors 4.1 of electric conductors.

As pointed out above, the same inventive concept can be implemented by means of a third embodiment of connectors, in which the body 3 has the mid-section of its bottom 3.3 provided with a hole or recess 8 for a socket plug connectable in a single action to three parallel contact prongs, which replace the flat connectors 4.1' and 9.3' and which are fastened to the terminal units 4 and 9 by welding or clamping.

The foregoing design and function can also be applied in other electrical installation fixtures, such as switches. The only difference between a switch and the above-described application lies principally in the fact that the connectors 4.2 of a socket plug are replaced by movable contact terminals and an earth terminal unit 9 is not needed (perhaps just a coupling possibility for the passage of an earth conductor).

## Claims

1. An electrical mounting fixture for use in the electrical installations of buildings, comprising a body (3) of insulating material, metallic terminal units (4), including first connectors (4.1/4.1') intended for contact with electric conductors (7), and a housing section (1) constituting a cover or a case which conceals an interior (5) of the electrical mounting fixture, said interior (5) including at least the body (3) and the terminal units (4), **characterized in that** the first connectors (4.1/4.1') inside the body (3) are provided
- either with connecting cables (7), which are connected directly to the first connectors (4.1) and are extending a distance away from the body (3, 6)
- or with rapid connectors (4.1'), having the electric conductors or connecting cables (7) therefor engageable therewith by means of mating connectors (7.1), which are present at the ends of the electric conductors or connecting cables (7).

2. An electrical mounting fixture as set forth in claim 1, **characterized in that** the first connectors (4.1/4.1') are in the form of lugs provided by deflections of the terminal units' (4) actual material or in the form of coupling prongs secured to the terminal units (4) by welding or clamping.

3. An electrical mounting fixture as set forth in claim 1 or 2, **characterized in that** the body (3) has the mid-section of its bottom (3.3) provided with adjacent holes (3.1) to provide a passage for the connecting cables (7) engaging with the second first connectors (4.1/4,1').

4. An electrical mounting fixture as set forth in any of claims 1-3, **characterized in that** the terminal units (4) approach each other at the mid-sections thereof, in which the terminal units' first connectors (4.1/4.1') are located, the electric conductors (7) engaging or being engageable with the first connectors (4.1/4.1') from the bottom side of a socket.

5. An electrical mounting fixture as set forth in any of claims 1-4, **characterized in that** the first connectors (4.1) comprise clamps, which are prefitted with connecting cables (7) for external coupling and/or branching, said connecting cables emerging from the holes (3.1) in the body's (3) bottom (3.3).

6. An electrical mounting fixture as set forth in any of claims 1-4, **characterized in that** the first connectors (4.1) comprise flat connectors or similar connectors, which enable a disengageable coupling with the mating connectors (7.1) present at the ends of the electric conductors or connecting cables (7).

7. An electrical mounting fixture as set forth in any of claims 1-4, **characterized in that** the body (3) has the mid-section of its bottom provided with a hole or recess (8) for a plug connector, which is engageable with the first connectors constituted by adjacent coupling prongs.

8. An electrical mounting fixture as set forth in any of claims 1-7, **characterized in that** the body (3) is narrower in the middle than at the ends carrying the first connectors (4.1/4.1').

9. An electrical mounting fixture as set forth in any of claims 1-8, which is a 2-gang socket-outlet, further comprising
- second connectors (4.2) included in the terminal units (4) and matched for contact with the prongs of a plug, and
- an earth terminal unit (9), which is provided with earth springs (9.1) matched for contact with the earth clips of a plug and with a third connector (9.3) intended for contact with an earth wire (10), **characterized in that** the third connector (9.3/9.3') is outfitted, configured and engageable the same way as the first connectors (4.1/4.1').

10. A socket-outlet as set forth in claim 9, **characterized in that** the first and second connectors (4.1/4.1', 4.2) of the terminal units (4) are integral with the terminal units (4) and that the third connector (9.3/9.3') is integral with a bridge (9.2) of the earth terminal unit (9), said bridge (9.2) linking the earth springs (9.1) mechanically and electrically to each other.

11. A socket-outlet as set forth in claim 9 or 10, **characterized in that** the third (9.3/9.3') connector is set between the first connectors (4.1/4.1').

12. An electrical mounting fixture as set forth in any of claims 1-11, specifically a 2-gang socket-outlet, **characterized in that** the interior (5) includes an insulating element (6) for covering the metallic terminal units (4) and providing a cover for the body (3).

## Patentansprüche

1. Elektrisches Bauteil zur Verwendung in den Elektroanlagen von Gebäuden, umfassend einen Körper (3) aus Isoliermaterial, metallene Anschlusseinheiten (4), die erste Verbinder (4.1/4.1') aufweisen, die für einen Kontakt mit elektrischen Leitern (7) vorgesehen sind, und einen Gehäuseabschnitt (1), der eine Abdeckung oder eine Hülle darstellt, die ein Inneres (5) des elektrischen Bauteils verbirgt, wobei das Innere (5) mindestens den Körper (3) und die Anschlusseinheiten (4) aufweist, **dadurch gekennzeichnet, dass** die ersten Verbinder (4.1/4.1') im Inneren des Körpers (3) versehen sind
- entweder mit Verbindungskabeln (7), die direkt mit den ersten Verbindern (4.1) verbunden sind und sich ein Stück von dem Körper(3, 6) weg erstrecken,
- oder mit Schnellverbindern (4.1'), wobei die elektrischen Leiter oder Verbindungskabel (7) dafür mithilfe dazu passender Verbinder (7.1) in Eingriff bringbar sind, die an den Enden der elektrischen Leiter oder Verbindungskabel (7) vorhanden sind.

2. Elektrisches Bauteil nach Anspruch 1, **dadurch gekennzeichnet, dass** die ersten Verbinder (4.1/4.1') in Form von Fahnen, die durch Biegungen des eigentlichen Materials der Anschlusseinheiten (4) bereitgestellt werden, oder in Form von Kopplungsstiften, die durch Schweißen oder Klemmen an den Anschlusseinheiten (4) befestigt sind, vorliegen.

3. Elektrisches Bauteil nach Anspruch 1 oder 2, **dadurch gekennzeichnet, dass** der Körper (3) im Mittelabschnitt seines Bodes (3.3) mit benachbarten Löchern (3.1) versehen ist, um einen Durchlass für die Verbindungskabel (7) bereitzustellen, die mit den ersten Verbindern (4.1/4,1') in Eingriff stehen.

4. Elektrisches Bauteil nach einem der Ansprüche 1-3, **dadurch gekennzeichnet, dass** sich die Anschlusseinheiten (4) an ihren Mittelabschnitten, in denen sich die ersten Verbinder (4.1/4.1') der Anschlusseinheiten befinden, einander nähern, wobei die elektrischen Leiter (7) von der Unterseite einer Steckdose her mit den ersten Verbindern (4.1/4.1') in Eingriff stehen oder in Eingriff bringbar sind.

5. Elektrisches Bauteil nach einem der Ansprüche 1-4, **dadurch gekennzeichnet, dass** die ersten Verbinder (4.1) Klemmen umfassen, die mit Verbindungskabeln (7) zum externen Koppeln und/oder Verzweigen vorausgestattet sind, wobei die Verbindungskabel aus den Löchern (3.1) im Boden (3.3) des Körpers (3) austreten.

6. Elektrisches Bauteil nach einem der Ansprüche 1-4, **dadurch gekennzeichnet, dass** die ersten Verbinder (4.1) flache Verbinder oder ähnliche Verbinder umfassen, die ein lösbares Koppeln mit den dazu passenden Verbindern (7.1) ermöglichen, die an den Enden der elektrischen Leiter oder Verbindungskabel (7) vorhanden sind.

7. Elektrisches Bauteil nach einem der Ansprüche 1-4, **dadurch gekennzeichnet, dass** der Körper (3) im Mittelabschnitt seines Bodens mit einem Loch oder einer Aussparung (8) für einen Steckverbinder versehen ist, der mit den ersten Verbindern in Eingriff bringbar ist, die durch benachbarte Kopplungsstifte dargestellt werden.

8. Elektrisches Bauteil nach einem der Ansprüche 1-7, **dadurch gekennzeichnet, dass** der Körper (3) in der Mitte schmaler ist als an den Enden, welche die ersten Verbinder (4.1/4.1') tragen.

9. Elektrisches Bauteil nach einem der Ansprüche 1-8, bei dem es sich um eine Doppelsteckdose handelt, die ferner umfasst:
- zweite Verbinder (4.2), die in den Anschlusseinheiten (4) enthalten und für einen Kontakt mit den Stiften eines Steckers angepasst sind, und
- eine Erdanschlusseinheit (9), die mit Erdfedern (9.1), die für einen Kontakt mit den Erdklemmen eines Steckers angepasst sind, und mit einem dritten Verbinder (9.3), der für einen Kontakt mit einem Erdleiter (10) vorgesehen ist, versehen ist,
**dadurch gekennzeichnet, dass** der dritte Verbinder (9.3/9.3') in der gleichen Weise ausgestattet, ausgeführt und in Eingriff bringbar ist wie die ersten Verbinder (4.1/4.1').

10. Steckdose nach Anspruch 9, **dadurch gekennzeichnet, dass** die ersten und zweiten Verbinder (4.1/4.1', 4.2) der Anschlusseinheiten (4) einstückig mit den Anschlusseinheiten (4) vorliegen und dass der dritte Verbinder (9.3/9.3') einstückig mit einer Brücke (9.2) der Erdanschlusseinheit (9) vorliegt, wobei die Brücke (9.2) die Erdfedern (9.1) mechanisch und elektrisch miteinander verbindet.

11. Steckdose nach Anspruch 9 oder 10, **dadurch gekennzeichnet, dass** der dritte Verbinder (9.3/9.3') zwischen den ersten Verbindern (4.1/4.1') angeordnet ist.

12. Elektrisches Bauteil nach einem der Ansprüche 1-11, konkret eine Doppelsteckdose, **dadurch gekennzeichnet, dass** das Innere (5) ein Isolierelement (6) zum Abdecken der metallenen Anschlusseinheiten (4) und Bereitstellen einer Abdeckung für den Körper (3) aufweist.

## Revendications

1. Montage électrique à utiliser dans les installations électriques de bâtiments, comprenant un corps (3) de matériau isolant, des unités de borniers métalliques (4), incluant des premiers connecteurs (4.1/4.1') enclins au contact avec des conducteurs électriques (7) et une section de boîtier (1) constituant un couvercle ou un box qui dissimule un intérieur (5) du montage électrique, ledit intérieur (5) incluant au moins le corps (3) et les borniers (4), **caractérisé en ce que** les premiers connecteurs (4.1/4.1') à l'intérieur du corps (3) sont pourvus
- soit de câbles de connexion (7), qui sont connectés directement aux premiers connecteurs (4.1) et s'étendent à distance du corps (3,6),
- soit de connecteurs rapides (4.1') ayant les conducteurs électriques ou câbles de connexion (7) venant en prise avec ces derniers au moyen de connecteurs appariés (7.1), qui sont présents aux extrémités des conducteurs électriques ou câbles de connexion (7).

2. Montage électrique selon la revendication 1, **caractérisé en ce que** les premiers connecteurs (4.1/4.1') prennent la forme d'ergots fournis par des déflexions du matériau effectif des borniers (4) ou la forme de broches de couplage fixées aux borniers (4) par soudage ou serrage.

3. Montage électrique selon la revendication 1 ou 2, **caractérisé en ce que** le corps (3) a la section centrale de son fond (3.3) pourvue de trous adjacents (3.1) pour fournir un passage pour les câbles de connexion (7) venant en prise avec les seconds premiers connecteurs (4.1/4.1').

4. Montage électrique selon une quelconque des revendications 1-3, **caractérisé en ce que** les bornes (4) se rapprochent l'un de l'autre aux sections centrales de ces derniers, dans lesquelles les premiers connecteurs des borniers (4.1/4.1') sont situés, les conducteurs électriques (7) venant en prise ou pouvant être mis en prise avec les premiers connecteurs (4.1/4.1') à partir du côté de fond d'une prise.

5. Montage électrique selon une quelconque des revendications 1-4, **caractérisé en ce que** les premiers connecteurs (4.1) comprend des pinces, qui sont préajustées avec des câbles de connexion (7) en vue d'un couplage et/ou branchement externe, lesdits câbles de connexion émergeant des trous (3.1) dans le fond (3.3) du corps (3).

6. Montage électrique selon une quelconque des revendications 1-4, **caractérisé en ce que** les premiers connecteurs (4.1) comprennent des connecteurs plats ou connecteurs similaires, qui permettent un couplage désengageable avec les connecteurs appariés (7.1) présents aux extrémités des conducteurs électriques ou câbles de connexion (7).

7. Montage électrique selon une quelconque des revendications 1-4, **caractérisé en ce que** le corps (3) a la section centrale de son fond pourvue d'un trou ou évidement (8) destiné à un connecteur enfichable, qui peut être mis en prise avec les premiers connecteurs constitués par des broches de couplage adjacentes.

8. Montage électrique selon une quelconque des revendications 1-7, **caractérisé en ce que** le corps (3) est plus étroit dans le centre qu'aux extrémités portant les premiers connecteurs (4.1/4.1').

9. Montage électrique selon une quelconque des revendications 1-8, qui est une prise de courant double, comprenant en outré :
- des seconds connecteurs (4.2) inclus dans les borniers (4) et appariés en vue d'un contact avec les broches d'une fiche, et
- un bornier de terre (9), qui est pourvu de ressorts de terre (9.1) apparié en vue d'un contact avec les clips de terre d'une fiche et avec un troisième connecteur (9.3) enclin à un contact avec un fil de terre (10),
**caractérisé en ce que** le troisième connecteur (9.3/9.3') est équipé, configuré et peut venir en prise de la même manière que les premiers connecteurs (4.1/4.1').

10. Prise de courant selon la revendication 9, **caractérisée en ce que** le premier et le second connecteur (4.1/4.1', 4.2) des borniers (4) sont en un seul tenant avec les borniers (4) et **en ce que** le troisième connecteur (9.3/9.3') est en un seul tenant avec un pont (9.2) de l'unité de bornier (9), ledit pont (9.2) reliant les ressorts de terre (9.1) mécaniquement et électriquement l'un à l'autre.

11. Prise de courant selon la revendication 9 ou 10, **caractérisée en ce que** le troisième connecteur (9.3/9.3') est placé entre les premiers connecteurs (4.1/4.1').

12. Montage électrique selon une quelconque des revendications 1-11, notamment une prise de courant double, **caractérisé en ce que** l'intérieur (5) inclut un élément isolant (6) pour couvrir les unités de borniers (4) et fournir un couvercle pour le corps (3).
